# EUROPÄISCHE PATENTSCHRIFT

(11) **EP 2 220 974 B1**
(45) Veröffentlichungstag und Bekanntmachung des Hinweises auf die Patenterteilung: **16.10.2013**
(21) Anmeldenummer: 10150927.1
(22) Anmeldetag: 18.01.2010
(51) Int. Cl.: A47J 31/60, A47J 31/44, A47J 31/46

(54) **Getränkeautomat**
Drinks machine
Automate à boissons

(30) Priorität: 20.01.2009 DE 102009000311
(43) Veröffentlichungstag der Anmeldung: 25.08.2010
(73) Patentinhaber: BSH Bosch und Siemens Hausgeräte GmbH, 81739 München (DE)
(72) Erfinder: Kramer, Siegmund, 83417, Kirchanschöring (DE); Ostermaier, Albert, 83371, Stein a.d. Traun (DE)

(56) Entgegenhaltungen:
- WO-A2-2008/129376
- GB-A- 2 367 550

## Beschreibung

Die vorliegende Erfindung betrifft einen Getränkeautomaten, insbesondere einen Kaffeevollautomaten.

Bei üblichen Getränkeautomaten, insbesondere bei Kaffeeautomaten, ist unterhalb eines Getränkeauslaufs eine Sammelstelle für Restwasser vorgesehen, welches beispielsweise dadurch anfällt, dass der Getränkeautomat bei längeren Unterbrechungen automatisch gespült wird. Das anfallende Restwasser fließt somit allein aufgrund der Schwerkraft in den unten in dem Getränkeautomaten angeordneten Restwasserbehälter und muss von dort von Zeit zu Zeit entsorgt werden. Nachteilig bei derartigen Restwasserbehältern ist jedoch, dass diese einerseits eine gewisse Größe aufweisen müssen, um ein besonders häufiges Entleeren zu vermeiden, und andererseits möglichst klein gehalten werden sollten, um die gesamte Baugröße des Getränkeautomatens nicht über Gebühr zu erhöhen. Folglich muss stets ein Kompromiss zwischen einem vergleichsweise kleinen Restwasserbehälter, welcher einen geringen Platzbedarf bedeutet, und einem vergleichsweise großen Restwasserbehälter, welcher ein seltenes Leeren desselben ermöglicht, gefunden werden.

Die GB 2 367 550 A offenbart einen Wasserspender mit einer Pumpe zur Herstellung eines Getränks und einer weiteren Pumpe zum Fördern von Restwasser aus einem Reservoir. Die WO2008/129376 A2 offenbart eine Maschine zur Herstellung von Espressogetränken mit einem Überlaufkanal zu einem Restwasserbehälter.

Die vorliegende Erfindung beschäftigt sich mit dem Problem, für einen Getränkeautomaten eine verbesserte Ausführungsform anzugeben, welche insbesondere eine kompakte Bauweise des Getränkeautomatens ermöglicht.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht insbesondere auf dem allgemeinen Gedanken, bisher nicht erschlossene Bauräume innerhalb eines Getränkeautomatens nunmehr für die Anordnung eines Restwasserbehälters zu nutzen bzw. zu erschließen, indem eine Fördereinrichtung, beispielsweise eine Pumpe oder ein Wassersauger, vorgesehen wird, welche das angefallene Restwasser in den Restwasserbehälter fördert, beispielsweise saugt oder drückt, und dadurch eine beliebige Anordnung des Restwasserbehälters, insbesondere auch oberhalb eines Getränkeauslaufs bzw. oberhalb einer Sammelstelle für das Restwasser ermöglicht. Da insbesondere Kaffeeautomaten in einem oberen Gehäusebereich, beispielsweise benachbart zu einem Mahlwerk, bisher noch nicht erschlossenen, das heißt ungenutzten, Bauraum besitzen, kann in diesem Bereich erfindungsgemäß der Restwasserbehälter angeordnet werden und mittels einer Fördereinrichtung mit einer Sammelstelle, an welcher das angefallene Restwasser gesammelt wird, verbunden werden. Die Fördereinrichtung kann dabei beispielsweise in der Art einer kleinen Elektropumpe ausgestaltet sein, welche einerseits kostengünstig und andererseits leistungsstark ist. Die Erschließung des bisher nicht genutzten Bauraums, insbesondere in einem oberen Bereich des Getränkeautomatens, erlaubt es, diesen insgesamt kompakter zu bauen und dabei gleichzeitig den Restwasserbehälter bezüglich seines Volumens zu vergrößern, so dass eine Entleerung des Restwasserbehälters lediglich selten erforderlich ist. Im Vergleich zum Stand der Technik muss nunmehr der Restwasserbehälter nicht mehr an der tiefsten Stelle des Getränkeautomatens angeordnet werden, da die Befüllung des Restwasserbehälters nicht mittels Schwerkraft erfolgt, sondern mittels der Fördereinrichtung, so dass die Anordnung des Restwasserbehälters lageunabhängig erfolgen kann. Generell soll dabei unter dem Begriff "Fördereinrichtung" sowohl eine Pumpe verstanden werden, die in der Lage ist zu saugen bzw. zu drücken, als auch ein "Wassersauger", also eine Art Nass-/Trockensauger, der in der Lage ist, feste und/oder flüssige Stoffe, mittels Unterdruck zu saugen und damit zu befördern.

Bei einer vorteilhaften Weiterbildung der erfindungsgemäßen Lösung, ist die Fördereinrichtung als Dickstoffpumpe ausgebildet. Da beim Spülen des Getränkeautomatens, insbesondere beim Spülen des Kaffeeautomatens, oftmals auch ein Kaffeesatz gelöst und im gelösten Zustand in den Restwasserbehälter befördert werden muss, muss die Fördereinrichtung in der Lage sein, zumindest einen gewissen Dickstoffanteil problemlos zu fördern. Durch die Ausbildung der Fördereinrichtung als Dickstoffpumpe ist es möglich, beispielsweise gelösten Kaffeesatz problemlos von der Sammelstelle des Restwassers in den Restwasserbehälter zu befördern und von dort problemlos, beispielsweise durch ein Ausgießen und Ausspülen, zu entsorgen.

Zweckmäßig weist der Restwasserbehälter ein zerklüftetes Volumen auf, mit welchem er sich an bisher nicht genutzte Bauräume anpasst und diese zumindest teilweise erschließt.

Auch im oberen Bereich des Getränkeautomatens steht oftmals kein geometrisch optimaler Bauraum zur Verfügung, sondern lediglich ein stark zerklüfteter, wobei aufgrund moderner Kunststoffspritzgussverfahren auch die Herstellung komplizierter Bauteilgeometrien keine Schwierigkeit mehr darstellt. Der Restwasserbehälter kann somit an konstruktive Umgebungsbedingungen, beispielsweise an ein benachbart angeordnetes Mahlwerk, angepasst werden und ist somit in der Lage, ein vergleichsweise großes Restwasservolumen bei vergleichsweise geringem Bauraumbedarf zu realisieren. Hierdurch lässt sich eine besonders kompakte Bauweise des erfindungsgemäßen Getränkeautomatens erreichen.

Erfindungsgemäß ist eine Füllstandseinrichtung zum Erkennen eines Restwasserfüllstandes im Sammelbereich des Getränkeautomatens vorgesehen, wobei die Füllstandseinrichtung derart ausgebildet ist, dass sie die Fördereinrichtung automatisch aktiviert, sofern ein vordefinierter Füllstand erreicht oder überschritten wird. Mit einer derartigen Füllstandseinrichtung ist es somit möglich, das angefallene Restwasser bis zu einem gewissen Grad zunächst im Bereich der Sammelstelle zu sammeln und erst bei Erreichen bzw. Überschreiten eines vordefinierten Füllstandes dieses mittels der Fördereinrichtung in den Restwasserbehälter zu fördern. Die Füllstandseinrichtung kann beispielsweise über einen Art Schwimmer bzw. über entsprechende Sensoren verfügen, welche den jeweiligen Füllstand des Restwassers im Sammelbereich exakt detektieren und gegebenenfalls die Fördereinrichtung aktivieren. Hierdurch ist insbesondere eine bedarfsgerechte Aktivierung der Fördereinrichtung möglich, so dass diese nicht stets in Betrieb ist, sondern lediglich dann, wenn es tatsächlich gilt, angefallenes Restwasser in den Restwasserbehälter zu befördern. Durch die bedarfsgerechte Aktivierung der Fördereinrichtung lässt sich die Lebensdauer derselben verlängern und darüber hinaus ein Energiebedarf des Getränkeautomatens reduzieren.

Generell soll unter dem Begriff "Fördereinrichtung" auch eine Hebeeinrichtung verstanden werden, so dass die Fördereinrichtung zur Verwirklichung der Erfindung lediglich in der Lage sein muss, angefallenes Restwasser auf ein höher liegendes Niveau anzuheben bzw. zu fördern.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: einen erfindungsgemäße Getränkeautomaten mit einer innerhalb diesem angeordneten Fördereinrichtung und einem externen Restwasserbehälter,
- Fig. 2: eine Darstellung wie in Fig. 1, wobei jedoch die Fördereinrichtung in den externen Restwasserbehälter integriert ist,
- Fig. 3: eine Darstellung wie in Fig. 1, jedoch mit einem in den Getränkeautomaten integrierten Restwasserbehälter.

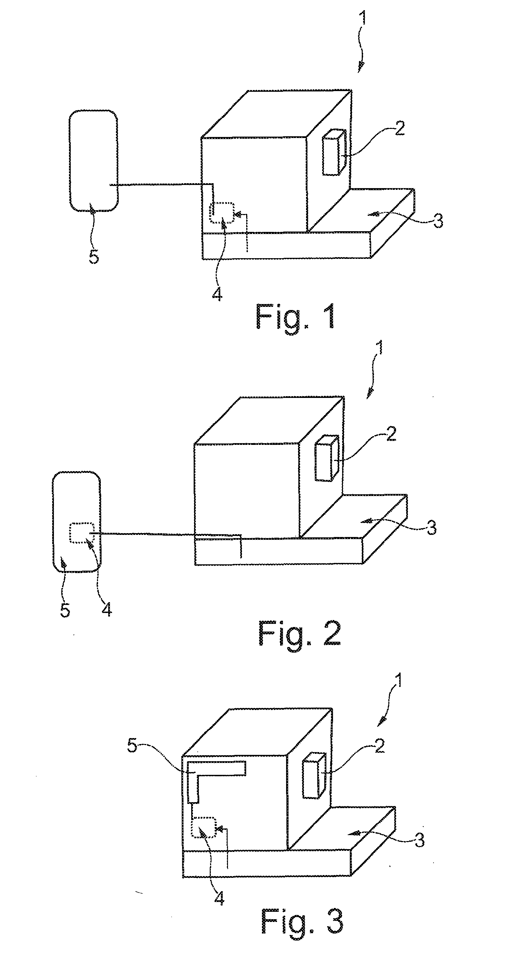

Entsprechend den Fig. 1 bis 3, weist ein erfindungsgemäßer Getränkeautomat 1, welcher beispielsweise als Kaffeeautomat ausgebildet ist, zumindest einen Getränkeauslauf 2 sowie eine darunter angeordnete Restwassersammelstelle 3 auf. Die Restwassersammelstelle 3 wird dabei üblicherweise zum Sammeln und Auffangen von Restwasser verwendet, welches beim Spülen des Getränkeautomatens 1 anfällt. Die Restwassersammelstelle 3 erstreckt sich dabei gemäß den Fig. 1 bis 3 zumindest bereichsweise unterhalb des Getränkeautomatens 1 und ist erfindungsgemäß mit einer Fördereinrichtung 4, beispielsweise einer Pumpe oder einem (Wasser-)sauger, kommunizierend verbunden. Die Fördereinrichtung 4 kann dabei, wie in den Fig. 1 und 3 gezeigt ist, innerhalb des Getränkeautomatens 1 angeordnet sein oder wie in Fig. 2 gezeigt, separat zu diesem.

Ausgangsseitig ist die Fördereinrichtung 4 mit einem Restwasserbehälter 5 kommunizierend verbunden, so dass bei eingeschalteter Fördereinrichtung 4 Restwasser aus der Restwassersammelstelle 3 in den Restwasserbehälter 5 gepumpt werden kann. Der Restwasserbehälter 5 kann dabei wahlweise extern des Getränkeautomatens 1 angeordnet werden (vgl. Fig. 1 und 2) oder innerhalb des Getränkeautomatens 1 und hier insbesondere an einer relativ zur Restwassersammelstelle 3 höher gelegenen Stelle.

Durch die erfindungsgemäß vorgesehene Fördereinrichtung 4 ist es somit möglich, in einem oberhalb der Restwassersammelstelle 3 gelegenen Bereich des Getränkeautomatens 1 den Restwasserbehälter 5 vorzusehen, so dass ein dort vorhandener und bisher nicht genutzter Bauraum nunmehr erschlossen und mit dem Restwasserbehälter 5 belegt werden kann. Denkbar ist selbstverständlich auch, dass der Restwasserbehälter 5 extern angeordnet ist und durch Verwendung der Fördereinrichtung 4 ebenfalls oberhalb der Restwassersammelstelle 3 positioniert werden kann.

Die Fördereinrichtung 4 kann beispielsweise in der Art einer kleinen Elektropumpe ausgestaltet sein, welche einerseits kostengünstig andererseits leistungsstark ist. Auch die Ausbildung der Fördereinrichtung in der eines Wassersauger, der mittels Unterdruck feste und flüssige Stoffe an-/absaugt, ist denkbar. Je nach Standort der Fördereinrichtung ist diese in der Lage das Restwasser aus dem Restwasserbehälter zu saugen oder zu drücken. Die Erschließung von bisher nicht genutztem Bauraum, insbesondere in einem oberen Bereich des Getränkeautomatens 1, erlaubt es, diesen insgesamt kompakter zu bauen und dabei gleichzeitig den Restwasserbehälter 5 bezüglich seines Volumens so zu vergrößern, dass eine Entleerung desselben lediglich selten erforderlich ist. Im Vergleich zum Stand der Technik muss nunmehr der Restwasserbehälter 5 nicht mehr an der tiefsten Stelle des Getränkeautomatens 1 angeordnet werden, da die Befüllung des Restwasserbehälters 5 nicht mittels Schwerkraft erfolgt, sondern mittels der Fördereinrichtung 4, so dass die Anordnung des Restwasserbehälters 5 sowohl intern als auch extern des Getränkeautomatens 1 lageunabhängig erfolgen kann.

Generell kann dabei die Fördereinrichtung 4 als Stickstoffpumpe ausgebildet sein oder zumindest zur Förderung eines gewissen Dickstoffanteils in der Lage sein. Dies ist erforderlich, da beim Spülen des Getränkeautomatens 1, insbesondere beim Spülen des Kaffeeautomatens, oftmals auch ein Kaffeesatz gelöst und in gelöstem Zustand in den Restwasserbehälter 5 befördert werden muss.

Wie insbesondere der Fig. 3 zu entnehmen ist, kann der Restwasserbehälter 5 auch ein stark zerklüftetes Volumen bzw. eine stark zerklüftete Außengeometrie aufweisen, mit welcher er sich an den bisher im Getränkeautomaten 1 nicht genutzten Bauraum anpasst und diesen zumindest teilweise erschließt. Die Ausgestaltung des Restwasserbehälters 5 kann dabei vorzugsweise gänzlich an einen noch vorhandenen Bauraum im Getränkeautomaten 1 angepasst werden.

Die Aktivierung der erfindungsgemäßen Fördereinrichtung 4 wird Erfindungsgemäß über eine nicht gezeigte Füllstandseinrichtung erfolgen, die einen Restwasserfüllstand in der Restwassersammelstelle 3 des Getränkeautomatens detektiert und die Fördereinrichtung 4 automatisch aktiviert, sofern ein vordefinierter Füllstand erreicht oder überschritten wird.

Generell erlaubt das erfindungsgemäße Vorsehen der Fördereinrichtung 4 das Vorsehen des Restwasserbehälters 5 an einer im Vergleich zur Restwassersammelstelle 3 höher gelegenen Stelle sowohl extern als auch intern des Getränkeautomatens, wodurch ein Betreuungsaufwand für den Getränkeautomaten 1, ausgelöst durch ein häufiges Entleeren der Restwassersammelstelle 3, minimiert werden kann. Hierdurch ist insbesondere eine Steigerung der Kundenzufriedenheit zu erreichen.

### Bezugszeichenliste

- 1: Getränkeautomat
- 2: Getränkeauslauf
- 3: Restwassersammelstelle
- 4: Fördereinrichtung
- 5: Restwasserbehälter

## Patentansprüche

1. Getränkeautomat (1), insbesondere ein Kaffeevollautomat, mit einem Restwasserbehälter (5) zum Auffangen von Restwasser, wobei eine zwischen dem Restwasserbehälter (5) und einer Restwassersammelstelle (3) angeordnete Fördereinrichtung (4), insbesondere eine Pumpe, vorgesehen ist, welche das angefallene Restwasser in den Restwasserbehälter (5) fördert, **dadurch gekennzeichnet, dass** eine Füllstandseinrichtung zum Erkennen eines Restwasserfüllstandes in der Restwassersammelstelle (3) vorgesehen ist, wobei die Sensoreinrichtung derart ausgebildet ist, dass sie die Fördereinrichtung (4) aktiviert, sofern ein vordefinierter Füllstand erreicht oder überschritten wird.

2. Getränkeautomat nach Anspruch 1, **dadurch gekennzeichnet, dass** der Restwasserbehälter (5) oberhalb der Restwassersammelstelle (3), bzw. eines Getränkeauslaufs (2) angeordnet ist.

3. Getränkeautomat nach einem der Ansprüche 1 bis 2, **dadurch gekennzeichnet, dass** die Fördereinrichtung (4) als Dickstoffpumpe oder als Wassersauger ausgebildet ist.

4. Getränkeautomat nach einem der Ansprüche 1 bis 3, **dadurch gekennzeichnet, dass** der Restwasserbehälter (5) ein zerklüftetes Volumen aufweist, mit welchem er sich an bisher nicht genutzte Bauräume anpasst und diese zumindest teilweise erschließt.

5. Getränkeautomat nach einem der Ansprüche 1 bis 4, **dadurch gekennzeichnet, dass** die Fördereinrichtung (4) als Elektropumpe ausgebildet ist.

6. Getränkeautomat nach einem der Ansprüche 1 bis 5, **dadurch gekennzeichnet, dass** der Restwasserbehälter (5) separat zum Getränkeautomat (1) oder innerhalb desselben angeordnet ist.

7. Getränkeautomat nach einem der Ansprüche 1 bis 6, **dadurch gekennzeichnet, dass** die Fördereinrichtung (4) am Restwasserbehälter (5) oder am Getränkeautomaten (1) angeordnet ist.

## Claims

1. Automatic beverage machine (1), in particular an automatic coffee machine, having a residual water container (5) for collecting residual water, wherein a conveyor facility (4), in particular a pump, disposed between the residual water container (5) and a residual water collection point (3) is provided, which conveys the resulting residual water into the residual water container (5), **characterised in that** a fill level facility is provided to identify a residual water fill level in the residual water collection point (3), the sensor facility being configured in such a manner that it activates the conveyor facility (4) if a predefined fill level is reached or exceeded.

2. Automatic beverage machine according to claim 1, **characterised in that** the residual water container (5) is disposed above the residual water collection point (3) or a beverage outlet (2).

3. Automatic beverage machine according to one of claims 1 to 2, **characterised in that** the conveyor facility (4) is configured as a thick matter pump or a water suction unit.

4. Automatic beverage machine according to one of claims 1 to 3, **characterised in that** the residual water container (5) has a jagged volume, which allows it to adjust to hitherto unused spaces and at least partially close them off.

5. Automatic beverage machine according to one of claims 1 to 4, **characterised in that** the conveyor facility (4) is configured as an electric pump.

6. Automatic beverage machine according to one of claims 1 to 5, **characterised in that** the residual water container (5) is disposed separately from the automatic beverage machine (1) or within it.

7. Automatic beverage machine according to one of claims 1 to 6, **characterised in that** the conveyor facility (4) is disposed on the residual water container (5) or on the automatic beverage machine (1).

## Revendications

1. Distributeur de boissons (1), notamment distributeur automatique de café, comprenant un réservoir d'eau résiduelle (5) destiné à récupérer l'eau résiduelle, un dispositif de transport (4), notamment une pompe, disposé entre le réservoir d'eau résiduelle (5) et un emplacement collecteur d'eau résiduelle (3) étant ménagé, lequel dispositif de transport transporte dans le réservoir d'eau résiduelle l'eau résiduelle produite, **caractérisé en ce qu'**un dispositif indicateur de niveau de remplissage est ménagé pour identifier un niveau de remplissage d'eau résiduelle dans l'emplacement collecteur d'eau résiduelle (3), le dispositif de capteur étant réalisé de manière à ce qu'il active le dispositif de transport (4) dans la mesure où un niveau de remplissage prédéfini est atteint ou dépassé.

2. Distributeur de boissons selon la revendication 1, **caractérisé en ce que** le réservoir d'eau résiduelle (5) est disposé au-dessus de l'emplacement collecteur d'eau résiduelle (3) resp. au-dessus d'une sortie de boisson.

3. Distributeur de boissons selon l'une quelconque des revendications 1 à 2, **caractérisé en ce que** le dispositif de transport (4) est réalisé comme pompe pour liquides épais ou comme aspirateur d'eau.

4. Distributeur de boissons selon l'une quelconque des revendications 1 à 3, **caractérisé en ce que** le réservoir d'eau résiduelle (5) présente un volume fracturé à l'aide duquel il s'adapte à des espaces de construction non utilisés auparavant et aménage ceux-ci au moins en partie.

5. Distributeur de boissons selon l'une quelconque des revendications 1 à 4, **caractérisé en ce que** le dispositif de transport (4) est réalisé comme pompe électrique.

6. Distributeur de boissons selon l'une quelconque des revendications 1 à 5, **caractérisé en ce que** le réservoir d'eau résiduelle (5) est disposé de manière séparée du distributeur de boissons (1) ou à l'intérieur de celui-ci.

7. Distributeur de boissons selon l'une quelconque des revendications 1 à 6, **caractérisé en ce que** le dispositif de transport (4) est disposé sur le réservoir d'eau résiduelle (5) ou sur le distributeur de boissons (1)
